# EUROPEAN PATENT APPLICATION

(11) **EP 4 502 328 A1**
(43) Date of publication of application: **05.02.2025**
(21) Application number: 23867643.1
(22) Date of filing: 22.09.2023
(51) Int. Cl.: E05F 15/00

(54) **DRIVE DEVICE, VEHICLE, AND CONTROL METHOD FOR DRIVE DEVICE**

(30) Priority: 23.09.2022 CN 202211166633
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: YANG, Jie, Ningbo, Zhejiang 315899 (CN); CAO, Huosen, Ningbo, Zhejiang 315899 (CN); HU, Xiang, Ningbo, Zhejiang 315899 (CN); LIU, Zhiyong, Ningbo, Zhejiang 315899 (CN); LI, Guolin, Ningbo, Zhejiang 315899 (CN); XU, Yun, Ningbo, Zhejiang 315899 (CN)
(74) Representative: Kraus & Lederer PartGmbB
(86) International application number: PCT/CN2023/120790
(87) International publication number: WO 2024/061358

(57) **Abstract**

The present application relates to a drive device, a vehicle, and a method of controlling a drive device. A drive device (100) includes an articulated structure (1), a transmission structure (2), and a drive structure (3). The articulated structure (1) includes a fixed end (12) and a movable end (11) articulatedly connected to the fixed end (12). The transmission structure (2) is provided at the movable end (11) and includes a connection rod (21) and a rocker arm (22). One end of the connection rod (21) is rotatably connected to the rocker arm (22), and the other end of the connection rod (21) is rotatably connected to the fixed end (12). The drive structure (3) is provided at the movable end (11) and includes an actuator (31) and a drive shaft (32). The drive shaft (32) is fixedly connected to an end of the rocker arm (22) away from the connection rod (21). The actuator (31) drives the drive shaft (32) to rotate the rocker arm (22) about an axis of the drive shaft (32).

## Description

### TECHNICAL FIELD

The present application relates to the field of vehicle technology, and in particular to a drive device, a vehicle, and a method of controlling a drive device.

### BACKGROUND

With the rapid development of the vehicle industry, consumers have increasingly high demands for vehicle automation. Manual opening or closing of trunk doors of vehicles in the past can no longer meet the current consumer demand for vehicle functionality.

At present, more and more vehicles have trunk doors formed by a combination of upper and lower tailgates. The lower tailgate, when opened, can expand the trunk space, providing users with more ways to use it in different scenarios.

### SUMMARY

The present application provides a drive device, a vehicle, and a method of controlling a drive device.

A first aspect of the present application provides a drive device, including an articulated structure, a transmission structure, and a drive structure. The articulated structure includes a fixed end and a movable end articulatedly connected to the fixed end. The transmission structure is provided at the movable end and includes a connecting rod and a rocker arm. One end of the connecting rod is rotatably connected to the rocker arm, and the other end of the connecting rod is rotatably connected to the fixed end. The drive structure is provided at the movable end and includes an actuator and a drive shaft. The drive shaft is fixedly connected to an end of the rocker arm away from the connecting rod. The actuator drives the drive shaft to rotate the rocker arm about an axis of the drive shaft. Due to a stable output torque of the actuator, the rocker arm is driven by the actuator to rotate non-linearly, such that the connecting rod pushes the movable end to pivot, which is conducive to overcoming the problem of constant change in the force arm of the drive device during opening and closing, and improves the stability of the drive device during the opening and closing.

Further, the drive structure includes a driving gear and a driven gear. The driving gear is connected to the actuator. The driven gear meshes with the driving gear and is fixedly connected to the drive shaft, where the driving gear has a diameter smaller than that of the driven gear. A reduction ratio between the driving gear and the driven gear enables the driven gear to amplify the torque of the actuator, which is conducive to reducing the requirements for parameters of the actuator, and thus reducing the size and cost of the actuator, as compared to the case in which the actuator is directly connected to the drive shaft.

Further, the driven gear includes a first driven gear and a second driven gear, the first driven gear meshing with the driving gear and the second driven gear, respectively, and the second driven gear being fixedly connected to the drive shaft, where the first driven gear has a diameter larger than that of the driving gear and smaller than that of the second driven gear. In this way, it is possible to avoid the need for a huge driven gear due to an excessive reduction ratio in the case of one-stage gear transmission, which is conducive to optimizing the volume of the drive device.

Further, the first driven gear includes a first sub-gear and a second sub-gear, where the first sub-gear is fixedly connected to the second sub-gear, and the first sub-gear has a diameter larger than that of the second sub-gear; and the first sub-gear meshes with the driving gear, and the second sub-gear meshes with the second driven gear. In this way, multiple gears can be arranged in different planes, making full use of multiple dimensions of space in the drive device, improving the compactness of the structure, and optimizing the utilization of space.

Further, the drive device further includes a sealing sleeve. The sealing sleeve is disposed around a portion of the connecting rod, and one end of the sealing sleeve is fixedly connected to the connecting rod, and the other end of the sealing sleeve extends to the movable end. In this way, even if impurities enter the drive device, the sealing sleeve can keep the impurities out of the drive structure and the transmission structure, preventing the impurities from affecting the drive structure and the transmission structure.

Further, an end of the connecting rod close to the rocker arm includes a first socket, and an end of the rocker arm close to the connecting rod includes a first ball, the first ball being rotatably disposed in the first socket; and/or an end of the connecting rod close to the fixed end includes a second socket, and the fixed end includes a second ball, the second ball being rotatably disposed in the second socket. With the contact between spherical surfaces, an angle of rotation between the connecting rod and the rocker arm increases, so as to enable rotation in multiple directions, which improves the rotation flexibility of the drive device at rotatable connection positions during opening or closing, making the movement of the drive device smoother.

Further, the drive device further includes a torque sensor configured to detect the torque of the actuator. In this way, it is possible to avoid damage to the actuator as well as personal injury and damage to foreign objects, due to catching of the objects during pivoting of the movable end close to the fixed end.

A second aspect of the present application provides a vehicle, including a door assembly and the drive device as described in the preceding first aspect, where the drive device is configured to drive the door assembly to open or close. By providing the drive device, the actuator drives the rocker arm to rotate non-linearly to drive the connecting rod to push the movable end to pivot away from or close to the fixed end, thereby enabling automatic opening and closing of the door assembly. Moreover, the actuator has a stable torque output, which can effectively improve the stability of the angle change of the door assembly during opening and closing.

Further, the vehicle further includes a vehicle body, and the door assembly includes a lower tailgate. The movable end of the articulated structure of the drive device is fixedly connected to the lower tailgate, and the fixed end of the articulated structure is fixedly connected to the vehicle body. In this way, the lower tailgate has a uniform change in force during opening and closing process by pivoting, such that the lower tailgate can be opened and closed smoothly at a uniform speed, improving the stability of the opening and closing process.

Further, the vehicle further includes a locking structure and a locking sensor. The locking structure includes a vehicle body locking member and a lower tailgate locking member cooperating with the vehicle body locking member, and the locking sensor is configured to detect a locking state between the vehicle body locking member and the lower tailgate locking member. By providing the locking sensor, it is possible to detect whether the lower tailgate locking member and the vehicle body locking member are locked together, thereby detecting whether the drive device is pivoted in place and switched to a closed state, and avoiding accidental opening of the lower tailgate caused by the drive device not being closed in place.

A third aspect of the present application provides a method of controlling a drive device, applied to the vehicle as described in the preceding second aspect, the method including: acquiring a state of the drive device; and controlling an operation mode of the actuator, where the operation mode includes: a forward rotation mode, in which the movable end is pivoted away from the fixed end; a reverse rotation mode, in which the movable end is pivoted close to the fixed end; and a stop mode, in which a relative position between the movable end and the fixed end is maintained. By acquiring the state of the drive device and then controlling the operation mode of the actuator, the drive device can be adjusted intelligently and automatically to improve the flexibility and ease of use of the drive device.

Further, acquiring the state of the drive device includes: acquiring a torque of the actuator; and controlling the operation mode of the actuator includes: activating the stop mode in response to the torque of the actuator being greater than a preset value. In this way, when the torque of the actuator is greater than the preset value, the pivoting movement of the drive device can be stopped in time, so as to avoid damage to the drive device caused by the continued forward rotation of the actuator when, for example, the drive device is pivoted to open (with the actuator rotated forward) and there is insufficient external space, or to avoid damage to the drive device and damage to a foreign object caused by the continued reverse rotation of the actuator when the drive device is pivoted to close (with the actuator rotated in reverse) and the foreign object is between the movable end and the fixed end.

Further, the method further includes: before acquiring the state of the drive device, acquiring an initial operation mode of the actuator, and the method further includes: after activating the stop mode, determining whether the initial operation mode is the forward rotation mode or the reverse rotation mode; activating the reverse rotation mode in response to determining that the initial operation mode is the forward rotation mode; and activating the forward rotation mode in response to determining that the initial operation mode is the reverse rotation mode. In this way, if there is an obstacle during the opening of the drive device, the actuator will be rotated in reverse to close the drive device, so as to avoid collision between the protruding movable end and the obstacle, resulting in damage to the obstacle or the movable end. If there is an obstacle during the closing of the drive device, the actuator will be rotated forward to open the drive device, so as to prevent the drive device from maintaining the catching of the obstacle.

Further, the method further includes: before acquiring the torque of the actuator, setting a number of abnormalities N and making N equal to 0; and the method further includes: before determining whether the initial operation mode is the forward rotation mode or the reverse rotation mode, determining whether the number of abnormalities N is greater than 0; maintaining the stop mode in response to N being greater than 0; and increasing N by 1 in response to N being not greater than 0.

Further, acquiring the state of the drive device includes: acquiring an angle between the fixed end and the movable end; and controlling the operation mode of the actuator includes: activating the stop mode in response to the angle reaching a preset value. In this way, a value of the angle between the fixed end and the movable end can be acquired in real time, and the operation mode of the actuator can be controlled to be the stop mode when the value of the angle is equal to the preset value, thereby avoiding problems such as jamming between the movable end and the fixed end or damage to the actuator, caused by continued operation of the actuator when the movable end is pivoted to the closed or opened position.

It should be understood that the above general description and the following detailed description are exemplary and explanatory only, and are not intended to limit the present application.

### BRIEF DESCRIPTION OF DRAWINGS

In order to more clearly illustrate embodiments of the present application, the accompanying drawings to be used in the description of the embodiments will be briefly described below. Obviously, the drawings in the following description merely illustrate some of the embodiments of the present application, and other drawings may be obtained from these drawings by those ordinary skilled in the art without any creative efforts.
FIG. 1 is a front view illustrating a drive device according to an embodiment of the present application.
FIG. 2 is a rear view illustrating the drive device as shown in FIG. 1.
FIG. 3 is a side view illustrating the drive device as shown in FIG. 1 in a closed state.
FIG. 4 is a side view illustrating the drive device as shown in FIG. 1 in an opened state.
FIG. 5 is a schematic partial view illustrating a vehicle according to an embodiment of the present application, in which a lower tailgate is in a closed state.
FIG. 6 is a schematic partial view illustrating the vehicle as shown in FIG. 5, in which the lower tailgate is in an opened state.
FIG. 7 is a schematic flowchart illustrating a method of controlling a drive device according to an embodiment of the present application.
FIG. 8 is a schematic flowchart illustrating a method of controlling a drive device according to another embodiment of the present application.
FIG. 9 is a schematic flowchart illustrating a method of controlling a drive device according to still another embodiment of the present application.
FIG. 10 is a schematic flowchart illustrating a method of controlling a drive device according to yet another embodiment of the present application.
FIG. 11 is a schematic flowchart illustrating a method of controlling a drive device according to yet another embodiment of the present application.

### Description of reference numerals

100 drive device, 1 articulated structure, 11 movable end, 111 connecting rod hole, 12 fixed end, 13 pivot axis, 2 transmission structure, 21 connecting rod, 22 rocker arm, 3 drive structure, 31 actuator, 32 drive shaft, 33 driving gear, 34 driven gear, 341 first driven gear, 342 second driven gear, 343 first sub-gear, 344 second sub-gear, 4 sealing sleeve, 51 first fixing plate, 52 second fixing plate, 200 vehicle, 210 vehicle body, 220 lower tailgate, 230 upper tailgate, 240 trunk space.

### DETAILED DESCRIPTION

Reference will now be made in detail to exemplary embodiments, examples of which are illustrated in the accompanying drawings. When the following description refers to the drawings, the same numerals in different drawings indicate the same or similar elements, unless otherwise indicated. Modes described in the following exemplary embodiments are not intended to be representative of all modes consistent with the present application. Rather, they are merely examples of devices and methods consistent with some aspects of the present application as detailed in the appended claims.

Terminology used herein is for the purpose of describing particular embodiments only, and is not intended to be limiting of the present application. Unless otherwise defined, technical or scientific terms used herein shall have their ordinary meanings as understood by a person of ordinary skill in the art to which the present application pertains. Terms "first," "second," and the like as used in the specification and claims of the present application do not imply any order, quantity, or importance, but are merely used to distinguish one component from another. Similarly, terms "a" or "an" and the like do not denote a limitation on quantity, but rather denote the presence of at least one, which would be stated separately if they referred only to "one". "A plurality of' or "multiple" means two or more. Unless otherwise indicated, terms "front," "rear," "lower," and/or "upper" and the like are for convenience of description only, and are not limited to a position or a spatial orientation. Terms "including" or "comprising" and the like are intended to mean that elements or items appearing before "including" or "comprising" encompass elements or items listed after "including" or "comprising" and equivalents thereof, without excluding other elements or items. Terms "connected" or "coupled" and the like are not limited to physical or mechanical connections, but may include electrical connections, whether direct or indirect. As used in the specification and the appended claims of the present application, the singular forms of "a," "an," "the," and "said" are intended to include plural forms as well, unless the context clearly dictates otherwise. It should also be understood that the term "and/or" as used herein refers to and includes any or all possible combinations of one or more of the associated listed items.

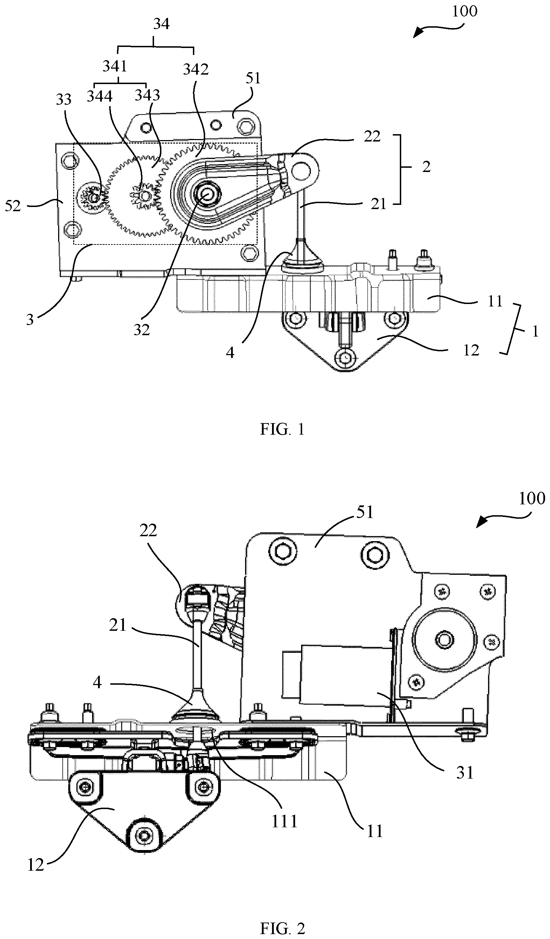

Referring to FIG. 1 to FIG. 4, a first aspect of the present application provides a drive device 100, including an articulated structure 1, a transmission structure 2, and a drive structure 3. The articulated structure 1 includes a fixed end 12 and a movable end 11 articulatedly connected to the fixed end 12. The transmission structure 2 and the drive structure 3 are both provided at the movable end 11. The transmission structure 2 includes a connecting rod 21 and a rocker arm 22. One end of the connecting rod 21 is rotatably connected to the rocker arm 22, and the other end of the connecting rod 21 is rotatably connected to the fixed end 12. The drive structure 3 includes an actuator 31 and a drive shaft 32. The drive shaft 32 is fixedly connected to an end of the rocker arm 22 away from the connecting rod 21, and the actuator 31 drives the drive shaft 32 to rotate the rocker arm 22 about an axis of the drive shaft 32.

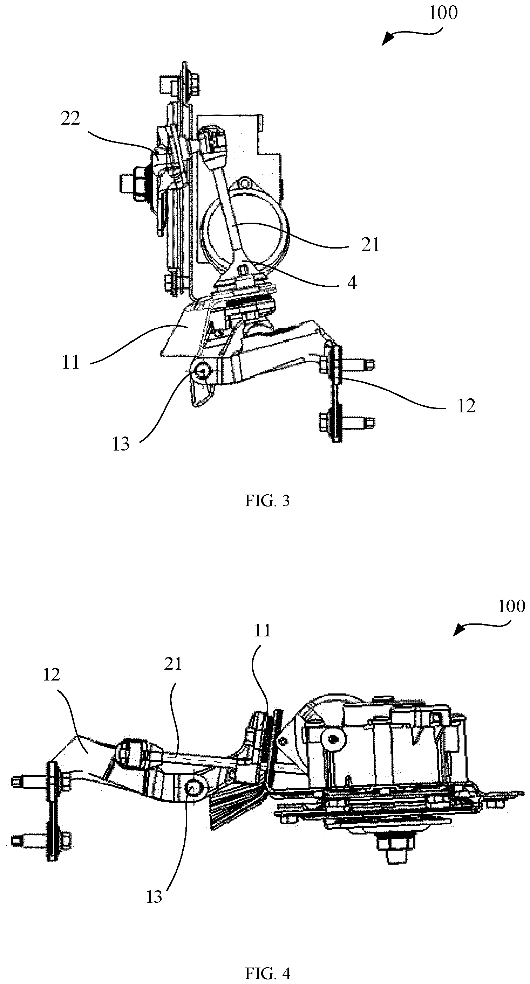

The drive device 100 includes a closed state and an opened state. The closed state is shown in FIG. 3, where an angle between the movable end 11 and the fixed end 12 is small and the connecting rod 21 is in an approximately vertical state. The opened state is shown in FIG. 4, where the angle between the movable end 11 and the fixed end 12 increases and the connecting rod 21 is in an approximately horizontal state.

Referring to FIG. 1, the drive device 100 is in the closed state. When the drive device 100 is switched from the closed state to the opened state, the actuator 31 drives the drive shaft 32 to rotate, such that an end of the rocker arm 22 connected to the connecting rod 21 moves downward. Since the other end of the connecting rod 21 is connected to the fixed end 12, which has a constant position, and the connecting rod 21 has a fixed length, the force originally exerted on the fixed end 12 by the connecting rod 21 is exerted on the movable end 11 in reverse, such that the movable end 11 is pivoted away from the fixed end 12 around a pivot axis 13. In this way, the drive device 100 can be switched from the closed state to the opened state.

On the contrary, when the drive device 100 is in the opened state, the actuator 31 drives the drive shaft 32 to rotate in a reverse direction, and the connecting rod 21 has a tendency to pull the fixed end 12. Due to the fixed position of the fixed end 12, the connecting rod 21 pulls up the movable end 11 in a reverse direction, such that the movable end 11 is pivoted close to the fixed end 12 around the pivot axis 13, thereby switching the drive device 100 from the opened state to the closed state.

In this way, the rocker arm 22 is driven by the actuator 31 with a stable output torque to rotate non-linearly, such that the connecting rod 21 pushes the movable end 11 to pivot, which is conducive to overcoming the problem of constant change in the force arm of the drive device 100 during opening and closing, and improves the stability of the drive device 100 during the opening and closing. Moreover, when the drive device 100 is switched between the opened state and the closed state, the connecting rod 21 can be switched from an approximately vertical state to an approximately horizontal state, and thus drive the movable end 11 to pivot relative to the fixed end 12 at a pivot angle in a range greater than or equal to 0° and less than or equal to 120°, enabling full opening and closing of the drive device 100.

In addition, referring to FIG. 3 and FIG. 4, when the drive device 100 is pivoted to a limit opened position, a change in the angle between the movable end 11 and the fixed end 12 reaches more than 100°, while a change in the angle of the connecting rod 21 is less than 80° or even 70°. In other words, the connecting rod 21 and the rocker arm 22 only need to be moved by a small amplitude to realize the complete opening and complete closing of the drive device 100. Therefore, the movement amplitude of the transmission structure 2 can be amplified with the arrangement of the present application, without reserving a large travel space for the transmission structure 2, thereby optimizing the volume of the transmission structure 2.

The rocker arm 22 may have a rod-like structure similar to the connecting rod 21. Alternatively, the rocker arm 22 may have a droplet-shaped structure as shown in FIG. 1, with a portion having a larger radius disposed on the drive shaft 32. A center line of the rocker arm 22 intersects the axis of the drive shaft 32, allowing the end of the rocker arm 22 close to the connecting rod 21 to make an arcuate trajectory as the drive shaft 32 rotates. When the connecting rod 21 exerts the force on the rocker arm 22 in reverse, the end of the rocker arm 22 close to the drive shaft 32 is subjected to a greater bending moment. In this way, the strength of the rocker arm 22 can be improved to avoid breakage of the rocker arm 22 during operation of the drive device 100. Moreover, as compared to the case where the rocker arm 22 is provided with a structure having a uniform width, the droplet-shaped structure can save material for the rocker arm 22, and also reduce the overall weight of the drive device 100.

An angle between the connecting rod 21 and the rocker arm 22, and an angle between the connecting rod 21 and the fixed end 12 are changed during the opening and closing of the drive device 100. In order to better realize the relative movement between the connecting rod 21 and the rocker arm 22, and between the connecting rod 21 and the fixed end 12, the end of the connecting rod 21 close to the rocker arm 22 includes a first socket (not shown), the end of the rocker arm 22 close to the connecting rod 21 includes a first ball (not shown), and the first ball is rotatably disposed in the first socket. Similarly, the end of the connecting rod 21 close to the fixed end 12 includes a second socket (not shown), the fixed end 12 includes a second ball (not shown), and the second ball is rotatably disposed in the second socket. With the contact between spherical surfaces, an angle of rotation between the connecting rod 21 and the rocker arm 22 increases, so as to enable rotation in multiple directions, which improves the rotation flexibility of the drive device 100 at rotatable connection positions during the opening or closing, making the movement of the drive device 100 smoother.

In other embodiments, the rocker arm 22 and the fixed end 12 may be provided with a socket, and the connecting rod 21 may be provided with a ball. Alternatively, one of the rocker arm 22 and the connecting rod 21 may be provided with a ball, and the other of the rocker arm 22 and the connecting rod 21 may be provided with a bearing, which is not limited in the present application. It should be noted that the manner in which the rocker arm 22 and the connecting rod 21 are connected may be the same or different from the manner in which the connecting rod 21 and the fixed end 12 are connected. By way of example, the rocker arm 22 may include a first socket, and the connecting rod 21 may be provided with a corresponding first ball, while a second ball may be provided at the other end of the connecting rod 21, and a bearing may be provided at the fixed end 12, which is not limited in the present application.

In some embodiments, a connecting rod hole 111 is provided at the movable end 11, such that the connecting rod 21 passes through the connecting rod hole 111 and is connected to the fixed end 12. When the drive device 100 is switched from the opened state to the closed state or from the closed state to the opened state, the connecting rod 21 can be moved in the connecting rod hole 111, so as to avoid interference with the movement of the movable end 11. Moreover, the arrangement in which the connecting rod 21 passes through the movable end 11 can also improve the compactness of the structure, which is conducive to reducing the volume occupied by the drive device 100. However, in other embodiments, it is possible to change the shape of the movable end 11 to provide the movable end 11 with an avoidance portion (not shown), so as to avoid the range of movement of the connecting rod 21 as a whole, but the present application is not limited thereto.

In addition, based on the above description, the drive device 100 according to the present application can amplify the movement amplitude of the transmission structure 2, and the connecting rod 21 and the rocker arm 22 only need to be moved by a small amplitude to realize the complete opening and complete closing of the drive device 100. Therefore, due to the relatively small movement amplitude of the connecting rod 21, the drive device 100 according to the present application can be provided with a small connecting rod hole 111 or avoidance portion, such that the movable end 11 has higher strength while reducing the overall size of the movable end 11.

In some embodiments, the actuator 31 may be directly connected to the drive shaft 32, such that the actuator 31 can directly drive the drive shaft 32 to rotate, simplifying the structure of the drive device 100, and preventing the drive device 100 from occupying too much space. In other embodiments, the drive structure 3 includes a driving gear 33 connected to the actuator 31, and a driven gear 34 meshing with the driving gear 33. The driven gear 34 is fixedly connected to the drive shaft 32, and the driven gear 34 has a diameter larger than that of the driving gear 33. In this way, the drive shaft 32 is indirectly connected to the actuator 31. The actuator 31 drives the driving gear 33 to rotate, such that the driven gear 34, which meshes with the driving gear 33, drives the drive shaft 32 to rotate. A reduction ratio between the driving gear 33 and the driven gear 34 enables the driven gear 34 to amplify a torque of the actuator 31, which is conducive to reducing the requirements for parameters of the actuator 31, and thus reducing the size and cost of the actuator 31, and indirectly optimizing the size and cost of the drive device 100, as compared to the case in which the actuator 31 is directly connected to the drive shaft 32.

In order to control the sizes of the driven gear 34 and the driving gear 33 so as to optimize the size of the drive device 100, in some embodiments, the driven gear 34 includes a first driven gear 341 and a second driven gear 342. The first driven gear 341 meshes with the driving gear 33 and the second driven gear 342, respectively, and the second driven gear 342 is fixedly connected to the drive shaft 32. The first driven gear 341 has a diameter larger than that of the driving gear 33 and smaller than that of the second driven gear 342. By means of multi-stage gear transmission, a first stage of reduction can be completed between the driving gear 33 and the first driven gear 341 to realize a first torque increase, and a second stage of reduction can be completed between the first driven gear 341 and the second driven gear 342 to realize a second torque increase. In this way, it is possible to avoid the need for a huge driven gear 34 due to an excessive reduction ratio in the case of one-stage gear transmission, which is conducive to optimizing the size of the drive device 100.

In order for further space optimization for the drive device 100, in some embodiments, the first driven gear 341 includes a first sub-gear 343 and a second sub-gear 344. The first sub-gear 343 is fixedly connected to the second sub-gear 344, and has a diameter larger than that of the second sub-gear 344. The first sub-gear 343 meshes with the driving gear 33, and the second sub-gear 344 meshes with the second driven gear 342. The first sub-gear 343 is fixedly connected to the second sub-gear 344, such that when the driving gear 33 meshes with the first sub-gear 343 and rotates, the second sub-gear 344 rotates along with the first sub-gear 343, to drive the second driven gear 342 to rotate. By arranging the first sub-gear 343 and the second sub-gear 344, a reduction ratio between the driving gear 33 and the first driven gear 341, and a reduction ratio between the first driven gear 341 and the second driven gear 342 remain unchanged. However, since the second driven gear 342 meshes with the smaller second sub-gear 344, a distance between an axis of rotation of the second driven gear 342 and an axis of rotation of the first driven gear 341 is reduced. In other words, orthographic projections of the second driven gear 342 and the first driven gear 341 on a plane of rotation of the gear such as the driving gear 33 partially overlap with each other. Therefore, instead of simply laying multiple gears flat in the same plane, the multiple gears can be arranged in different planes, making full use of multiple dimensions of space in the drive device 100, improving the compactness of the structure, and optimizing the utilization of space.

However, in other embodiments, the transmission structure 2 may adopt a chain transmission, a belt transmission, or other transmission, which is not limited in the present application.

In addition, the drive device 100 may further include a lubricating layer (not shown). The lubricating layer may be provided in the transmission structure 2, for example, on gear teeth of the driving gear 33 and the driven gear 34, or may be provided at a connection position between the connecting rod 21 and the rocker arm 22, which is not limited in the present application. By providing a lubricating layer between two parts that are in contact with each other and move relative to each other, it is possible to improve the smoothness of the drive device 100 during the opening and closing, avoid sharp noise caused by friction between parts to affect the user experience, and avoid friction fatigue of parts due to long-term friction, such that the service life of the drive device 100 can be prolonged to a certain extent.

In some embodiments, the drive device 100 further includes a first fixing plate 51 for fixing the drive structure 3. The first fixing plate 51 is connected to the movable end 11, such that the drive structure 3 is indirectly connected to the movable end 11. The actuator 31 is disposed on one side of the first fixing plate 51, the rocker arm 22 is disposed on the other side of the first fixing plate 51, and the drive shaft 32 passes through the first fixing plate 51 so as to connect the actuator 31 and the rocker arm 22. Providing the first fixing plate 51 can facilitate assembly. The drive structure 3 and the transmission structure 2 can be assembled on the first fixing plate 51, and then the first fixing plate 51 can be connected to the movable end 11 so as to realize connection among various structures. However, in other embodiments, the first fixing plate 51 and the movable end 11 can be integrally formed, which is not limited in the present application.

In the embodiment where the drive device 100 includes a driven gear 34 and a driving gear 33, a chain transmission structure, or a belt transmission structure, in order to further fix the drive structure 3, the drive device 100 may further include a second fixing plate 52 arranged parallel to the first fixing plate 51 and connected to the first fixing plate 51. The actuator 31 is disposed on a side of the first fixing plate 51 away from the second fixing plate 52, and structures such as the driven gear 34 and the driving gear 33 are disposed between the first fixing plate 51 and the second fixing plate 52. In this way, the driven gear 34 and the driving gear 33 can remain in a fixed position by the first fixing plate 51 and the second fixing plate 52. Even if the driven gear 34 and the driving gear 33 tend to deviate from their positions by gravity when the angle of the movable end 11 is changed, the first fixing plate 51 and the second fixing plate 52 can hold against the driven gear 34 and the driving gear 33.

The first fixing plate 51 and the second fixing plate 52 may be flat plates. Alternatively, in some embodiments, one of the first fixing plate 51 and the second fixing plate 52 is a flat plate, and the other of the first fixing plate 51 and the second fixing plate 52 is a plate with a receiving cavity (not shown) provided in the middle. In this way, the first fixing plate 51 and the second fixing plate 52 can realize a fit connection around the perimeter thereof, and the receiving cavity is configured to receive the driven gear 34 and the driving gear 33. By such an arrangement, a sealed space can be provided for the driven gear 34 and the driving gear 33, and drive abnormalities caused by the tendency of foreign objects to be caught during the gear meshing due to rotation can be avoided. In addition, it is also possible to avoid the influence of external dust, water and other impurities on the lubricating layer and meshing of the gears. However, in other embodiments, each of the first fixing plate 51 and the second fixing plate 52 may be provided with a respective receiving half-cavity, and after the first fixing plate 51 and the second fixing plate 52 are in fit connection around the perimeter thereof, two receiving half-cavities form a complete receiving cavity, but the present application is not limited thereto.

After the drive device 100 is opened, the angle between the movable end 11 and the fixed end 12 increases, at which time impurities are prone to enter the actuator 31 and the transmission structure 2 through a gap between the connecting rod 21 and the movable end 11, negatively affecting the drive device 100. In order to improve the sealing protection for the actuator 31 and the transmission structure 2, and to prevent impurities such as water and dust from entering the drive structure 3 during the opening and closing of the drive device 100, which may lead to, for example, failure of the lubricating layer and short-circuiting of the actuator 31, the drive device 100 according to the present application further includes a sealing sleeve 4. The sealing sleeve 4 is disposed around a portion of the connecting rod 21, and one end of the sealing sleeve 4 is fixedly connected to the connecting rod 21, and the other end of the sealing sleeve 4 extends to the movable end 11. By such an arrangement, even if the impurities enter into the drive device 100, the sealing sleeve 4 can keep the impurities out of the drive structure 3 and the transmission structure 2, preventing the impurities from influencing the drive structure 3 and the transmission structure 2. The sealing sleeve 4 may also be fixedly connected to the movable end 11, for example, by bonding or the like, so as to seal a gap between the movable end 11 and the sealing sleeve 4, further improving the sealing performance of the sealing sleeve 4.

In some embodiments, the sealing sleeve 4 may be made of an elastic material, enabling stretching and retracting of the sealing sleeve 4 during movement of the connecting rod 21. In other embodiments, the sealing sleeve 4 may be provided with a multi-layer foldable structure, enabling the stretching and retracting of the sealing sleeve 4 by unfolding and folding of the multi-layer foldable structure during the movement of the connecting rod 21, which is not limited in the present application.

As the drive device 100 is switched from the opened state to the closed state, or from the closed state to the opened state, the angle between the movable end 11 and the fixed end 12 may be changed. In order to avoid damage to the actuator 31, personal injury and damage to foreign objects due to catching of the objects during the pivoting of the movable end 11 close to the fixed end 12, in some embodiments, the drive device 100 further includes a torque sensor to detect the torque of the actuator 31. In the event that the torque of the actuator 31 increases, it can be determined that the drive device 100 is catching a foreign object. Therefore, the operation of the actuator 31 may be stopped subsequently to avoid damage to persons and objects caused by the drive device 100, which can improve the safety of the drive device 100.

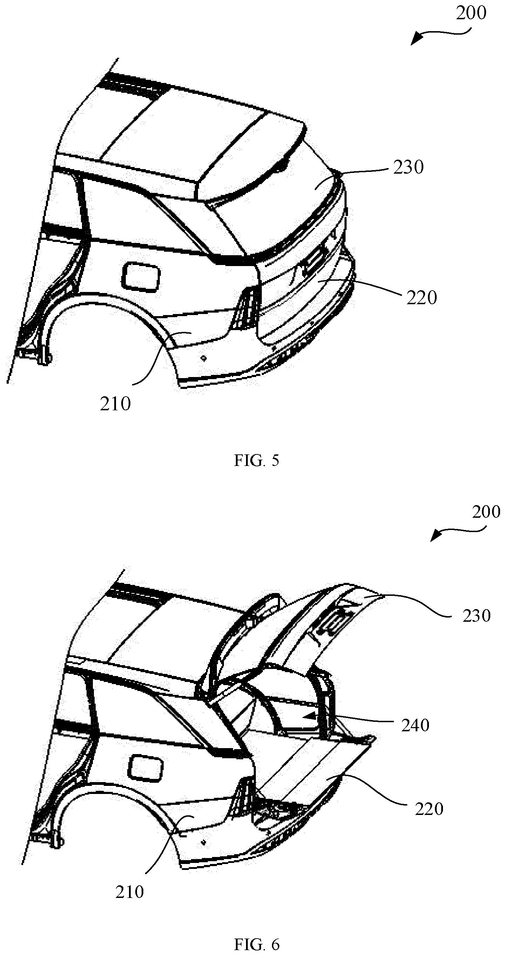

Based on the various embodiments as described above, with reference to FIGS. 5 and 6, a second aspect of the present application provides a vehicle 200 including a door assembly and the drive device 100 as described in the preceding first aspect, where the drive device 100 is configured to drive the door assembly to open or close. The drive device 100 may be provided at the door assembly such as a vehicle door, a trunk door, or a front hood, which is not limited in the present application. By providing the drive device 100, the actuator 31 drives the rocker arm 22 to rotate non-linearly to drive the connecting rod 21 to push the movable end 11 to pivot away from or close to the fixed end 12, thereby enabling automatic opening and closing of the door assembly. Moreover, the actuator 31 has a stable torque output, which can effectively improve the stability of the angle change of the door assembly during opening and closing.

In some embodiments, the vehicle 200 is provided with a vehicle body 210, and the door assembly includes a lower tailgate 220. The movable end 11 of the drive device 100 is fixedly connected to the lower tailgate 220, and the fixed end 12 is fixedly connected to the vehicle body 210. Therefore, when the actuator 31 drives the rocker arm 22 to rotate, the connecting rod 21 pushes the fixed end 12, and since the fixed end 12 is fixed to the vehicle body 210 and is difficult to move, the connecting rod 21 exerts the force on the movable end 11 in reverse, causing the movable end 11 to drive the lower tailgate 220 to pivot away from the vehicle body 210, thereby enabling the opening of the lower tailgate 220. On the contrary, when the actuator 31 drives the rocker arm 22 to rotate in a reverse direction, the connecting rod 21 applies a pull force to the fixed end 12, and since the fixed end 12 is immovable, the connecting rod 21 exerts the pull force on the movable end 11 in reverse, causing the movable end 11 to drive the lower tailgate 220 to pivot close to the vehicle body 210, thereby enabling the closing of the lower tailgate 220.

In this way, the lower tailgate 220 has a uniform change in force during the opening and closing process by pivoting, such that the lower tailgate 220 can be opened and closed smoothly at a uniform speed, improving the stability of the opening and closing process. Moreover, since the movable end 11 is pivoted relative to the fixed end 12 at a pivot angle ranging from 0° to 120°, the lower tailgate 220 can be fully opened. The lower tailgate 220, when opened, can expand the usable space of the trunk, providing users with more use possibilities, so as to meet the user requirements in different scenarios.

In some embodiments, the drive device 100 may be partially exposed from the lower tailgate 220 for ease of assembly and maintenance. In other embodiments, the drive device 100 is entirely hidden inside the lower tailgate 220, which can to a certain extent seal the drive device 100 through a shell of the lower tailgate 220, avoiding impurities from directly contacting the drive structure 3 and the transmission structure 2, resulting in a negative impact on the operation of the drive device 100. In addition, the hidden drive device 100 can not only improve the aesthetics of the lower tailgate 220 to avoid a bad visual impression caused by direct exposure of the drive device 100, but also avoid the occupation of space in the trunk.

In the embodiment where the drive device 100 includes the sealing sleeve 4, the shell of the lower tailgate 220 can be clamped to an end of the sealing sleeve 4 close to the movable end 11. In this way, even if impurities enter the drive device 100 through the gap between the movable end 11 and the sealing sleeve 4, the flexible connection between the lower tailgate 220 and the sealing sleeve 4, acting as a second assurance, can prevent the impurities from further entering into the drive device 100.

In addition, the drive device 100 may include a plurality of articulated structures 1. For example, in the case of the lower tailgate 220, the plurality of articulated structures 1 may be evenly distributed in the pivot axis 13, and the drive structure 3 is connected to one of the articulated structures 1. When the drive structure 3 drives the articulated structure 1 to pivot, the movable end 11 drives the lower tailgate 220 to pivot, causing the movable ends 11 of the other articulated structures 1 to pivot along with it. By providing the plurality of articulated structures 1, it is possible to improve the strength for supporting the lower tailgate 220, as well as the stability of the force on the lower tailgate 220 during opening and closing.

It should be noted that the vehicle 200 may include the lower tailgate 220 and an upper tailgate 230 as shown in FIGS. 5 and 6, thereby enabling opening and closing of a trunk space 240. Moreover, the upper tailgate 230 may also be provided with the drive device 100 according to the present application, which is not limited in the present application. However, the vehicle 200 may be a vehicle such as a pickup truck, or a van, that includes only the lower tailgate 220, which is not limited in the present application.

In some embodiments, the vehicle 200 further includes a locking structure (not shown) and a locking sensor (not shown). The locking structure includes a vehicle body locking member and a lower tailgate locking member cooperating with the vehicle body locking member. The locking sensor is configured to detect a locking state between the vehicle body locking member and the lower tailgate locking member. By providing the locking sensor, it is possible to detect whether the lower tailgate locking member and the vehicle body locking member are locked together, thereby detecting whether the drive device 100 is pivoted in place and switched to the closed state, and avoiding accidental opening of the lower tailgate caused by the drive device 100 not being closed in place. Moreover, it is possible to stop the operation of the actuator 31 when the lower tailgate locking member and the vehicle body locking member are locked in place, thereby avoiding undesired opening of the lower tailgate caused by abnormal operation of the actuator 31.

In the embodiment where the drive device 100 includes the torque sensor, it is also possible to perform timely detection and alarm when the lower tailgate is opened abnormally due to insufficient external space during the opening of the lower tailgate, or when an object or even a person is caught during the closing of the lower tailgate, to avoid impacts on the lower tailgate, the object, the person, and the actuator 31.

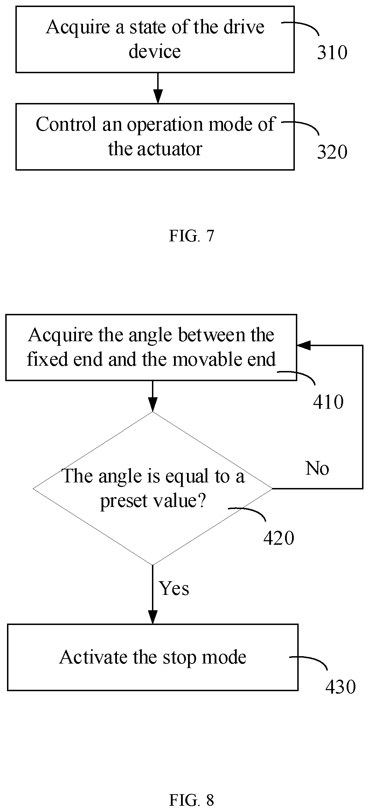

Referring to FIG. 7, a third aspect of the present application further provides a method of controlling a drive device, applicable to the vehicle 200 as described in the preceding second aspect. The method includes the following steps 310 and 320.

At step 310, a state of the drive device is acquired.

In this embodiment, the state of the drive device may include the torque of the actuator, the angle between the movable end and the fixed end, or the like, which is not limited in the present application.

At step 320, an operation mode of the actuator is controlled.

In this embodiment, the operation mode of the actuator includes: a forward rotation mode, in which the movable end is pivoted away from the fixed end; a reverse rotation mode, in which the movable end is pivoted close to the fixed end; and a stop mode, in which a relative position between the movable end and the fixed end is maintained.

In other words, when the actuator is in the forward rotation mode, the drive device can be switched from the closed state to the opened state. When the actuator is in the reverse rotation mode, the drive device can be switched from the opened state to the closed state. When no action is required from the actuator, the actuator is in the stop mode. The stop mode can be configured to maintain the drive device in the opened state or closed state, or to maintain the drive device in any desired state between the opened state and the closed state.

By acquiring the state of the drive device and then controlling the operation mode of the actuator, the drive device can be adjusted intelligently and automatically to improve the flexibility and ease of use of the drive device. Moreover, adjusting the operation mode of the actuator according to the state of the drive device enables targeted adjustments to the actuator, which is conducive to ensuring the normal operation of the drive device.

An embodiment in which the state of the drive device is the angle between the movable end and the fixed end will be described below. Referring to FIG. 8, a method of controlling the drive device includes the following steps 410 to 430.

At step 410, the angle between the fixed end and the movable end is acquired.

At step 420, it is determined whether the angle is equal to a preset value. If not, the method returns to perform the step 410; and if yes, the method proceeds to the next step.

In this embodiment, the preset value may be a first preset value, which is a value of the angle between the movable end and the fixed end when the drive device is in the closed state, or the preset value may be a second preset value, which is a value of the angle between the movable end and the fixed end when the drive device is in the opened state. By determining whether the acquired angle is equal to the preset value, it is possible to indirectly determine whether the drive device is in the closed state or in the opened state. If the acquired angle is inconsistent with the preset value, it can be determined that the drive device is still in the process of pivoting, and thus the method may return to the step 410 to continuously acquire the angle between the fixed end and the movable end. If the acquired angle is equal to the preset value, it can be determined that the drive device has been pivoted to the opened state or the closed state, and the method may perform the next step.

At step 430, the stop mode is activated.

In this way, a value of the angle between the fixed end and the movable end can be acquired in real time, and the operation mode of the actuator can be controlled to be the stop mode when the value of the angle is equal to the first preset value, thereby avoiding problems such as jamming between the movable end and the fixed end or damage to the actuator, caused by continued operation of the actuator when the movable end is pivoted to the closed position. Also, the operation mode of the actuator can be controlled to be the stop mode when the value of the angle is equal to the second preset value, thereby avoiding the problem that the movable end is pivoted beyond the travel of movement and thus making it difficult for the movable end to be pivoted in reverse to the closed position, caused by continued operation of the actuator when the movable end is pivoted to the opened position.

However, the preset value may also include both the first preset value and the second preset value, so as to stop the operation of the actuator in time when the drive device is pivoted to the fully closed state and to the fully opened state, which is not limited in the present application.

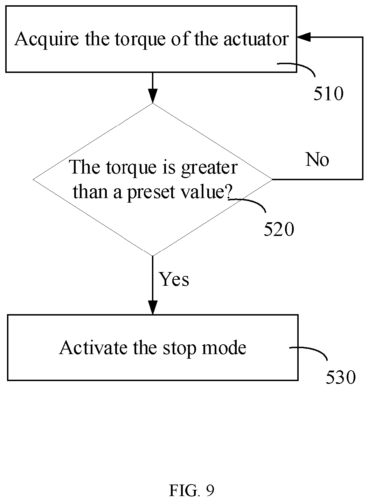

An embodiment of the method of controlling the drive device has been illustrated in FIG. 8. An embodiment in which the state of the drive device is the torque of the actuator will be described below. Referring to FIG. 9, a method of controlling the drive device includes the following steps 510 to 530.

At step 510, the torque of the actuator is acquired.

In this embodiment, the torque of the actuator may be configured to determine whether the actuator is in normal operation.

At step 520, it is determined whether the torque of the actuator is greater than a preset value. If not, the method returns to perform the step 510; and if yes, the method proceeds to the next step.

In this embodiment, the preset value may be a torque value of the actuator during normal operation. When the torque of the actuator is greater than the preset value, it can be determined that there is an obstruction at the movable end when it is pivoted away from or close to the fixed end, and thus it can be indirectly determined that there is a foreign object or an obstacle that is preventing the normal operation of the drive device.

At step 530, the stop mode is activated.

In this way, when the torque of the actuator is greater than the preset value, the pivoting movement of the drive device can be stopped in time, so as to avoid damage to the drive device caused by the continued forward rotation of the actuator when, for example, the drive device is pivoted to open (with the actuator rotated forward) and there is insufficient external space, or to avoid damage to the drive device and damage to a foreign object caused by the continued reverse rotation of the actuator when the drive device is pivoted to close (with the actuator rotated in reverse) and the foreign object is between the movable end and the fixed end. The foreign object may be an object that accidentally falls between the movable end and the fixed end from the outside, and the continued reverse rotation may result in damage to the object. The foreign object may even be a limb of a child, and the continued reverse rotation may result in personal injury. Therefore, the control method can improve the safety of the drive device to a certain extent.

It should be noted that step 520 may be incorporated into step 510 or step 530. Similarly, step 420 may be incorporated into step 410 or step 430, which is not limited in the present application. Moreover, in the same control method, both the acquisition of the torque of the actuator and the acquisition of the angle between the fixed end and the movable end may be performed, enabling the control method to monitor both the torque of the actuator and the relative position between the movable end and the fixed end.

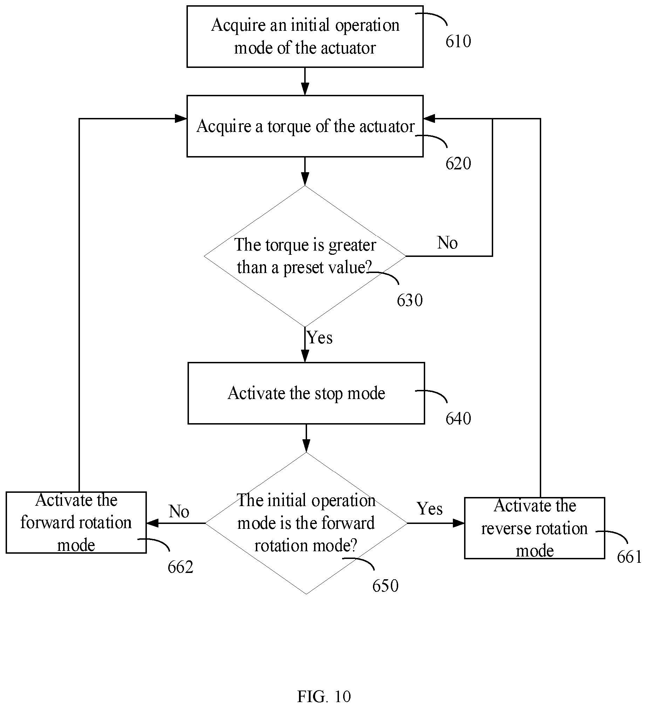

Referring to FIG. 10, the present application further provides a method of controlling the drive device, including the following steps 610 to 662.

At step 610, an initial operation mode of the actuator is acquired.

In this embodiment, the initial operation mode of the actuator may be a forward rotation mode, a reverse rotation mode, or a stop mode.

At step 620, a torque of the actuator is acquired.

At step 630, it is determined whether the torque of the actuator is greater than a preset value. If not, the method returns to perform the step 620; and if yes, the method proceeds to the next step.

In this embodiment, the preset value may be a torque value of the actuator during normal operation. When the torque of the actuator is greater than the preset value, it can be determined that there is an obstruction at the movable end when it is pivoted away from or close to the fixed end, and thus it can be indirectly determined that there is a foreign object or an obstacle that is preventing the normal operation of the drive device.

At step 640, the stop mode is activated.

In this embodiment, controlling the actuator to be the stop mode in time upon determining that the torque of the actuator is greater than the preset value, can avoid damage to the actuator and other structures of the drive device caused by the continued pivoting movement of the movable end.

At step 650, it is determined whether the initial operation mode is the forward rotation mode.

In this embodiment, since the torque of the actuator is greater than the preset value before the stop mode is activated, it means that the actuator is in the forward rotation mode or the reverse rotation mode at this time. That is, the movable end is being pivoted away from the fixed end or is being pivoted close to the fixed end. By determining the operation state of the initial operation mode, it is possible to determine whether the drive device is abnormal during the closing process or during the opening process.

If the initial operation mode is the forward rotation mode, the method performs step 661 in which the reverse rotation mode is activated.

In this embodiment, if the initial operation mode is the forward rotation mode, the reverse rotation mode is activated. In other words, if the torque of the actuator is greater than the preset value during pivoting of the movable end away from the fixed end, the movable end stops pivoting and the actuator is rotated in reverse to pivot the movable end close to the fixed end.

In this way, it is possible to determine whether there is an obstacle in the pivoting direction of the movable end during the opening of the drive device. If there is an obstacle, the actuator will be rotated in reverse to close the drive device, so as to avoid collision between the protruding movable end and the obstacle, resulting in damage to the obstacle or the movable end.

If the initial operation mode is not the forward rotation mode, the method performs step 662 in which the forward rotation mode is activated.

In this embodiment, since the torque of the actuator is greater than the preset value before the stop mode is activated, it means that the initial operation mode of the actuator is either the forward rotation mode or the reverse rotation mode at this time. If the initial operation mode of the actuator is not the forward rotation mode, it means that the initial operation mode of the actuator is the reverse rotation mode, at which time the forward rotation mode is activated. In other words, if the torque of the actuator is greater than the preset value during the pivoting of the movable end close to the fixed end, the movable end stops pivoting and the actuator is rotated forward to pivot the movable end away from the fixed end.

In this way, it is possible to determine whether there is a foreign object in the pivoting direction of the movable end during the closing of the drive device. If there is a foreign object, the actuator will be rotated forward to open the drive device, so as to prevent the drive device from maintaining the catching of the foreign object. In particular, in the event that the drive device accidentally catches a human body, opening the drive device by pivoting can avoid difficulty in removing the human body from between the movable end and the fixed end, and improve the safety of the drive device.

In this embodiment, after performing step 661 or step 662, the method may return to step 620 and re-determine whether or not the actuator is operated abnormally in the changed operation mode, so as to maintain real-time monitoring of the torque of the actuator and to avoid abnormal operation of the actuator in the changed operation mode.

It should be noted that at step 650, it may also be determined whether the initial operation mode is the reverse rotation mode. And accordingly, if yes, the method performs step 662; and if not, the method performs step 661. Alternatively, at step 650, it may also be determined whether the initial operation mode is the reverse rotation mode or the forward rotation mode. If it is the reverse rotation mode, the method performs step 662; and if it is the forward rotation mode, the method performs step 661.

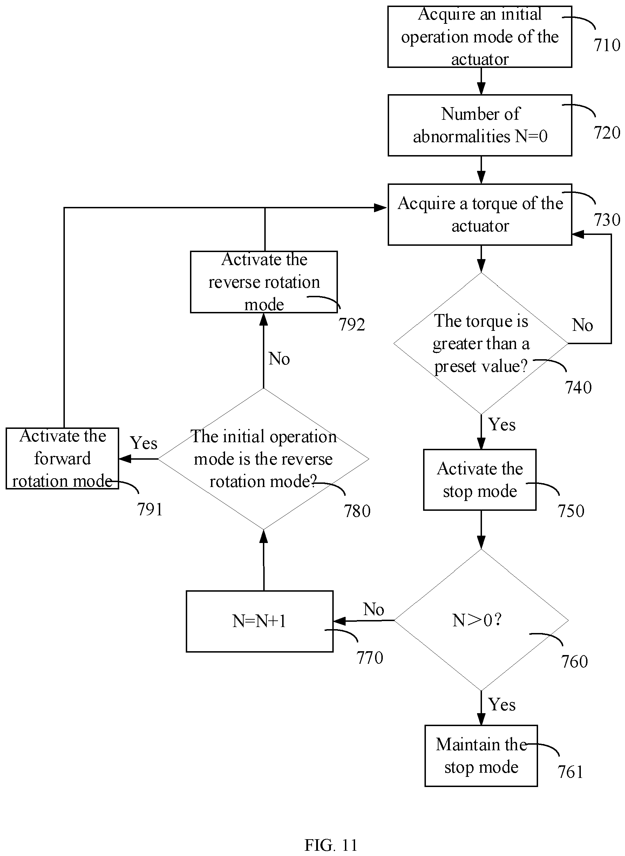

Based on the embodiment as shown in FIG. 10 and referring to FIG. 11, the present application further provides a method of controlling the drive device, including the following steps 710 to 792.

At step 710, an initial operation mode of the actuator is acquired.

At step 720, a number of abnormalities N is set and N is made equal to 0.

In this embodiment, the number of abnormalities may be configured to record the number of abnormalities in terms of the torque of the actuator.

At step 730, a torque of the actuator is acquired.

At step 740, it is determined whether the torque of the actuator is greater than a preset value. If not, the method returns to perform the step 730; and if yes, the method proceeds to the next step.

At step 750, the stop mode is activated.

At step 760, it is determined whether the number of abnormalities N is greater than 0.

If N is greater than 0, the method performs step 761 in which the stop mode is maintained.

If N is not greater than 0, the method performs step 770 in which N is increased by 1, and the method proceeds to the next step.

In this embodiment, if the number of abnormalities is 0, it means that the actuator has not yet been switched from the initial operation mode to the forward rotation mode or the reverse rotation mode, i.e., the actuator had not been operated abnormally before. At this point, by setting the value of N to (N+1), it is possible to record the abnormal operation of the actuator at this time, and then proceed to the next step.

If the number of abnormalities is greater than 0, it means that the actuator has been operated abnormally before. For example, the drive device may have encountered an obstruction during the opening process, at which point N is 0. As a result of the obstruction, the actuator executes a reverse rotation instruction to close the drive device, at which point N is 1. As a result of the obstruction being encountered again during the closing process, N is greater than zero, and the actuator executes a stop instruction.

When the surrounding environment is complex and there are many objects, there may be obstacles to both fully closing and fully opening of the drive device. By such a setting, it is possible to prevent the drive device from constantly switching back and forth between the opened state and the closed state, causing damage to the actuator. Moreover, by setting the number of abnormalities N, it is possible to improve the intelligence of the control method and avoid the control method from getting stuck in a loop that cannot be stopped.

At step 780, it is determined whether the initial operation mode is the reverse rotation mode.

If the initial operation mode is the reverse rotation mode, the method performs step 791 in which the forward rotation mode is activated.

If the initial operation mode is not the reverse rotation mode, the method performs step 792 in which the reverse rotation mode is activated.

In this embodiment, after performing step 791 or step 792, the method may return to step 730 and re-determine whether or not the actuator is operated abnormally in the changed operation mode, so as to maintain real-time monitoring of the torque of the actuator and to avoid abnormal operation of the actuator in the changed operation mode.

It should be noted that at step 780, it may also be determined whether the initial operation mode is the forward rotation mode. And accordingly, if yes, the method performs step 792; and if not, the method performs step 791. Alternatively, at step 780, it may also be determined whether the initial operation mode is the reverse rotation mode or the forward rotation mode. If it is the reverse rotation mode, the method performs step 791; and if it is the forward rotation mode, the method performs step 792. The present application is not limited thereto.

The specific embodiments described herein are merely illustrative of the spirit of the present application. Those skilled in the art to which the present application pertains may make various modifications, additions, or substitutions in similar methods to the specific embodiments described, without departing from the spirit of the present application or going beyond the scope limited by the appended claims.

Various technical features in the above embodiments may be combined in any combination, and not all possible combinations of the various technical features in the above embodiments have been described in order to make the description concise. However, as long as there is no contradiction in the combination of these technical features, they should be considered to be within the scope of this specification.

## Claims

1. A drive device, comprising:
an articulated structure, comprising a fixed end and a movable end articulatedly connected to the fixed end;
a transmission structure, provided at the movable end and comprising a connecting rod and a rocker arm, wherein one end of the connecting rod is rotatably connected to the rocker arm, and the other end of the connecting rod is rotatably connected to the fixed end; and
a drive structure, provided at the movable end and comprising an actuator and a drive shaft, wherein the drive shaft is fixedly connected to an end of the rocker arm away from the connecting rod, and the actuator drives the drive shaft to rotate the rocker arm about an axis of the drive shaft.

2. The drive device according to claim 1, wherein the drive structure comprises:
a driving gear connected to the actuator; and
a driven gear meshing with the driving gear and fixedly connected to the drive shaft, wherein the driving gear has a diameter smaller than that of the driven gear.

3. The drive device according to claim 2, wherein the driven gear comprises a first driven gear and a second driven gear, the first driven gear meshing with the driving gear and the second driven gear, respectively, and the second driven gear being fixedly connected to the drive shaft, wherein the first driven gear has a diameter larger than that of the driving gear and smaller than that of the second driven gear.

4. The drive device according to claim 3, wherein the first driven gear comprises a first sub-gear and a second sub-gear, where the first sub-gear is fixedly connected to the second sub-gear, and the first sub-gear has a diameter larger than that of the second sub-gear; and the first sub-gear meshes with the driving gear, and the second sub-gear meshes with the second driven gear.

5. The drive device according to any one of claims 1 to 4, further comprising:
a sealing sleeve disposed around a portion of the connecting rod, wherein one end of the sealing sleeve is fixedly connected to the connecting rod, and the other end of the sealing sleeve extends to the movable end.

6. The drive device according to any one of claims 1 to 5, wherein
an end of the connecting rod close to the rocker arm comprises a first socket, and an end of the rocker arm close to the connecting rod comprises a first ball, the first ball being rotatably disposed in the first socket; and/or
an end of the connecting rod close to the fixed end comprises a second socket, and the fixed end comprises a second ball, the second ball being rotatably disposed in the second socket.

7. The drive device according to any one of claims 1 to 6, further comprising:
a torque sensor configured to detect a torque of the actuator.

8. A vehicle, comprising a door assembly and the drive device according to any one of claims 1 to 7, wherein the drive device is configured to drive the door assembly to open or close.

9. The vehicle according to claim 8, further comprising a vehicle body, wherein the door assembly comprises a lower tailgate, the movable end of the articulated structure of the drive device is fixedly connected to the lower tailgate, and the fixed end of the articulated structure is fixedly connected to the vehicle body.

10. The vehicle according to claim 9, further comprising:
a locking structure comprising a vehicle body locking member and a lower tailgate locking member cooperating with the vehicle body locking member; and
a locking sensor configured to detect a locking state between the vehicle body locking member and the lower tailgate locking member.

11. A method of controlling a drive device, applied to the vehicle according to any one of claims 8 to 10, the method comprising:
acquiring a state of the drive device; and
controlling an operation mode of the actuator,
wherein the operation mode comprises: a forward rotation mode, in which the movable end is pivoted away from the fixed end; a reverse rotation mode, in which the movable end is pivoted close to the fixed end; and a stop mode, in which a relative position between the movable end and the fixed end is maintained.

12. The method according to claim 11, wherein acquiring the state of the drive device comprises:
acquiring a torque of the actuator; and
controlling the operation mode of the actuator comprises:
activating the stop mode in response to the torque of the actuator being greater than a preset value.

13. The method according to claim 12, further comprising:
before acquiring the state of the drive device,
acquiring an initial operation mode of the actuator,
wherein the method further comprises:
after activating the stop mode,
determining whether the initial operation mode is the forward rotation mode or the reverse rotation mode;
activating the reverse rotation mode in response to determining that the initial operation mode is the forward rotation mode; and
activating the forward rotation mode in response to determining that the initial operation mode is the reverse rotation mode.

14. The method according to claim 11, wherein acquiring the state of the drive device comprises:
acquiring an angle between the fixed end and the movable end; and
controlling the operation mode of the actuator comprises:
activating the stop mode in response to the angle reaching a preset value.

15. The method according to claim 13, further comprising:
before acquiring the torque of the actuator,
setting a number of abnormalities N and making N equal to 0;
wherein the method further comprises:
before determining whether the initial operation mode is the forward rotation mode or the reverse rotation mode,
determining whether the number of abnormalities N is greater than 0;
maintaining the stop mode in response to N being greater than 0; and
increasing N by 1 in response to N being not greater than 0.
